# EUROPÄISCHE PATENTSCHRIFT

(11) **EP 1 401 963 B1**
(45) Veröffentlichungstag und Bekanntmachung des Hinweises auf die Patenterteilung: **26.01.2005**
(21) Anmeldenummer: 02750892.8
(22) Anmeldetag: 07.05.2002
(51) Int. Cl.: C09B 67/00, C09D 11/00

(54) **FARBMITTELKOMBINATION**
DYE COMBINATION
COMBINAISON DE COLORANTS

(30) Priorität: 23.05.2001 DE 10125274
(43) Veröffentlichungstag der Anmeldung: 31.03.2004
(73) Patentinhaber: Clariant GmbH, 65929 Frankfurt am Main (DE)
(72) Erfinder: WUZIK, Andreas, 86836 Untermeitingen (DE); GEISENBERGER, Josef, 65843 Sulzbach (DE); MENZEL, Heidemarie, 65812 Bad Soden (DE)
(74) Vertreter: Hütter, Klaus, Dr.
(86) Internationale Anmeldenummer: PCT/EP2002/005009
(87) Internationale Veröffentlichungsnummer: WO 2002/094943

(56) Entgegenhaltungen:
- WO-A-01/72906
- GB-A- 2 332 439

## Beschreibung

Die Erfindung betrifft das Gebiet der Farbmittel, insbesondere zur Verwendung in Aufzeichnungsflüssigkeiten für Schreib- und Aufzeichnungsgeräte, z.B. für Tintenstrahldruck-Verfahren (Ink-Jet Verfahren).

Beim Tintenstrahl- oder Ink-Jet-Verfahren handelt es sich um ein berührungsloses Druckverfahren, bei dem Tröpfchen der Aufzeichnungsflüssigkeit aus einer oder mehreren Düsen auf das zu bedruckende Substrat gelenkt werden. Um Drucke hoher Schärfe und guter Auflösung zu erhalten, müssen die Aufzeichnungsflüssigkeiten und die darin enthaltenen Farbmittel hohen Anforderungen genügen, insbesondere im Hinblick auf Reinheit, Partikelfreiheit, Löslichkeit, Lagerstabilität, Viskosität, Oberflächenspannung sowie Leitfähigkeit. Insbesondere werden sehr hohe Anforderungen an die Farbstärke, Farbton, Brillanz und Echtheitseigenschaften wie beispielsweise Lichtechtheit, Wasserechtheit und Reibechtheit gestellt. Eine hohe Lichtechtheit ist insbesondere von großer Bedeutung für Ink-Jet-Anwendungen in Außenbereichen und bei der Herstellung von Ink-Jet Drucken mit photographischer Qualität.

Die wichtigste Rolle kommt dabei den in den Tinten eingesetzten Farbstoffen zu. Obwohl eine große Anzahl an Farbstoffen entwickelt wurden, gibt es nur wenige, die die an sie gestellten Anforderungen eines modemen Ink-Jet-Druckprozesses erfüllen.

Anfänglich setzte man traditionelle Farbstoffe aus den Bereichen Lebensmittel, Textil und Papier ein, die dann speziell für die Ink-Jet-Anwendung modifiziert wurden. Beispielhaft erklärt sei dies am Lebensmittel-Farbstoff C.I. Food Black 2 der Formel (1), der neben strukturell ähnlichen Verbindungen als schwarzer Farbstoff in Tinten zum Einsatz kam (JP 59-093,766).

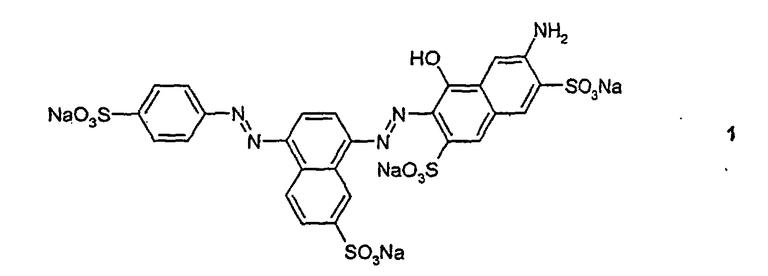

Die davon erhaltenen Drucke erscheinen aber nicht rein schwarz, sondern blauschwarz. Zudem sind die Lichtechtheiten nicht zufriedenstellend. Um diese Nachteile zu minimieren, variierte man die Substituenten von C.I. Food Black 2 und erhielt schwarze Farbstoffe der allgemeinen Formel (2), die einen neutraleren Schwarz-Ton zeigen und eine gesteigerte Wasserechtheit besitzen (US-A-5 053 495).

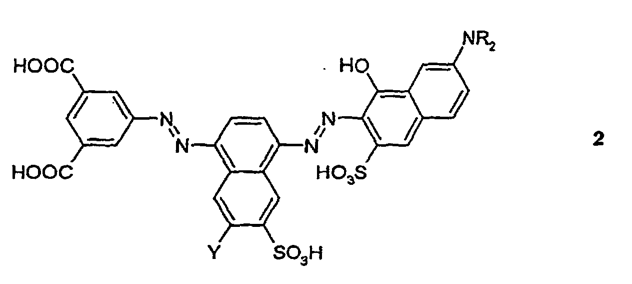

Mit dem Einführen der Carboxylgruppen wurde zwar eine verbesserte Wasserechtheit erzielt, aber gleichzeitig verschlechterte sich die Abriebfestigkeit, was darauf zurückgeführt wurde, dass die Farbstoff-Moleküle aufgrund von Aggregatbildung nicht mehr oder nur sehr wenig in das Aufnahmemedium penetrieren.

Um eine gesteigerte Lichtechtheit zu erreichen, nutzte man Metall-Komplexe von Dis-Azo- und Tetra-Azo-Farbstoffen wie zum Beispiel C.I. Direct Black 62 der Formel (3) (DE-A-198 31 095).

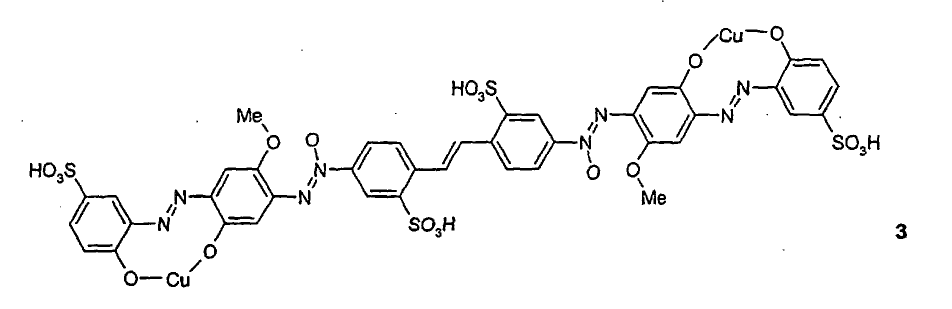

Obwohl die Echtheitseigenschaften verbessert wurden, genügt der Farbstoff (3) nicht allen Anforderungen. Beispielsweise besitzt er neben einer geringen Lagerstabilität eine zu geringe Löslichkeit im Anwendungsmedium.

Es besteht somit ein Bedarf an verbesserten Aufzeichnungsflüssigkeiten, welche den bereits bekannten schwarzen Tinten insbesondere in Farbton und Lichtechtheit überlegen sind und gleichzeitig die weiteren für den Ink-Jet-Bereich geforderten Eigenschaften aufweisen.
Eine weitere Aufgabe der Erfindung besteht in der Bereitstellung einer hoch lichtbeständigen und neutral-schwarzen Tintenformulierung.

Überraschenderweise wurde gefunden, dass die gestellten Anforderungen erfüllt werden können, wenn die nachstehend definierten Farbstoffmischungen eingesetzt werden.

Gegenstand der vorliegenden Erfindung sind Farbstoffmischungen, bestehend im wesentlichen aus einem oder mehreren Farbstoffen der Formel (4) und einem oder mehreren Farbstoffen der Formel (5) 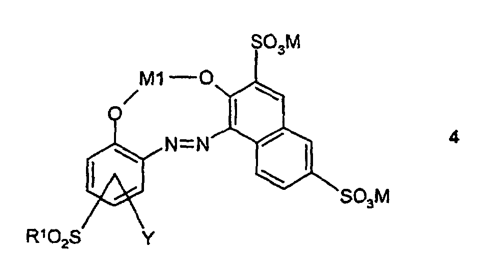 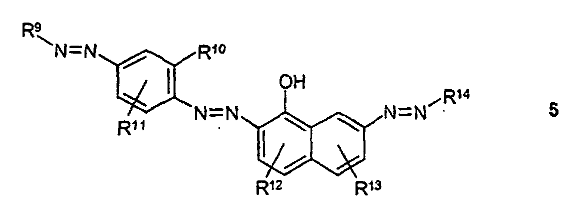 worin
- Y: H, (C₁-C₆)-Alkyl, (C₁-C₆)-Alkoxy oder Halogen;
- R¹: OM, CH=CH₂, CH₂CH₂OR², CH₂CH₂NR³R⁴, CH₂CH₂SR⁵ oder CH₂CH₂CR⁶R⁷R⁸ bedeutet,
- R²: H, SO₃M, (C₁-C₆)-Alkyl, durch ein oder mehrere, beispielsweise 1, 2 oder 3, Reste aus der Gruppe OH, NH₂, COOM und SO₃M substituiertes, verzweigtes oder unverzweigtes (C₁-C₆)-Alkyl; (C₁-C₆)-Acyl, (C₆-C₁₀)-Aryl, durch ein oder mehrere, beispielsweise 1, 2 oder 3, Reste aus der Gruppe Halogen, OH, NH₂, COOM und SO₃M substituiertes (C₆-C₁₀)-Aryl, oder 5- 10-gliedrige Heterocyclen mit 1 bis 4 Heteroatomen aus der Gruppe O, N und S, darstellen;
- R³ und R⁴: unabhängig voneinander H, (C₁-C₆)-Alkyl, durch ein oder mehrere, beispielsweise 1, 2 oder 3, Reste aus der Gruppe OH, NH₂, COOM und SO₃M substituiertes (C₁-C₆)-Alkyl, (C₁-C₆)-Acyl, (C₆-C₁₀)-Aryl, durch ein oder mehrere, beispielsweise 1, 2 oder 3, Reste aus der Gruppe OH, Halogen, NH₂, COOM und SO₃M substituiertes (C₆-C₁₀)-Aryl, darstellen; oder NR³R⁴ einen Heterocyclus bildet;
- R⁵: (C₁-C₆)-Alkyl, durch ein oder mehrere, beispielsweise 1, 2 oder 3, Reste aus der Gruppe OH, NH₂, COOM und SO₃M substituiertes, verzweigtes oder unverzweigtes (C₁-C₆)-Alkyl, (C₁-C₆)-Acyl, (C₆-C₁₀)-Aryl, durch ein oder mehrere, beispielsweise 1, 2 oder 3, Reste aus der Gruppe OH, Halogen, NH₂, COOM und SO₃M substituiertes (C₆-C₁₀)-Aryl, darstellt, oder SR⁵ einen Heterocyclus bildet;
- R⁶, R⁷, R⁸: unabhängig voneinander für H, (C₁-C₆)-Alkyl oder für durch ein oder mehrere, beispielsweise 1, 2 oder 3, Reste aus der Gruppe Halogen, OM, NH₂, COOCH₃, COOM und SO₃M substituiertes (C₁-C₆)-Alkyl stehen; oder ein oder zwei der Reste R⁶, R⁷, R⁸ für COOM stehen;
- R⁹: einen einfach oder mehrfach, z. B. 2-, 3-, 4- oder 5-fach, mit OM, O(C₁-C₆)-Alkyl, O(C₁-C₆)-Alkyl-COOM, O(C₁-C₆)-Alkyl-SO₃M, O(Hydroxy(C₁-C₆)-Alkyl),
(C₁-C₆)-Alkyl, COOM, SO₃M, SO₂NH₂, SO₂N(Hydroxy(C₁-C₆)-Alkyl)₂, SO₂NH(C₁-C₆)-Alkyl, SO₂N((C₁-C₆)-Alkyl)₂, NH₂, NH(C₁-C₆)-Alkyl, NH(C₁-C₆)-Acyl, NH(C₆-C₁₀)-Aryl, N(Hydroxy(C₁-C₆)-Alkyl)₂, N((C₁-C₆)-Alkyl)₂ und/oder Halogen substituierten (C₆-C₁₄)-Arylrest darstellt;
- R¹⁰: für OM, O(C₁-C₆)-Alkyl, COOM, SO₃M, COO(C₁-C₆-alkyl) oder SO₃(C₁-C₆-alkyl);
- R¹¹, R¹² und R¹³: gleich oder verschieden sind und für H, OM, O(C₁-C₆)-Alkyl, O(C₁-C₆)-Alkyl-COOM, O(C₁-C₆)-Alkyl-SO₃M, O(Hydroxy(C₁-C₆)-Alkyl), (C₁-C₆)-Alkyl, COOM, SO₃M, SO₂NH₂, SO₂N(Hydroxy(C₁-C₆)-Alkyl)₂, SO₂NH(C₁-C₆)-Alkyl, SO₂N((C₁-C₆)-Alkyl)₂, NH₂, NH(C₁-C₆)-Alkyl, NHAcyl, NH(C₆-C₁₄)-Aryl, N(Hydroxy(C₁-C₆)-Alkyl)₂, N((C₁-C₆)-Alkyl)₂, oder Halogen stehen,
- R¹⁴: für einen unsubstituierten oder für einen einfach oder mehrfach, z.B. 2-, 3-, 4- oder 5-fach, mit OM, O(C₁-C₆)-Alkyl, O(C₁-C₆)-Alkyl-COOM, O(C₁-C₆)-Alkyl-SO₃M, O(Hydroxy(C₁-C₆)-Alkyl), (C₁-C₆)-Alkyl, COOM, SO₃M, SO₂NH₂, CONH-Phenyl, SO₂NH-Phenyl, SO₂N(Hydroxy(C₁-C₆)-Alkyl)₂, SO₂NH(C₁-C₆)-Alkyl, SO₂N((C₁-C₆)-Alkyl)₂, NH₂, NH(C₁-C₆)-Alkyl, NH(C₁-C₆)-Acyl, NH(C₆-C₁₀)-Aryl, N(Hydroxy(C₁-C₆)-Alkyl)₂, N((C₁-C₆)-Alkyl)₂, Halogen und/oder Phenylsulfo substituierten ein- oder zweikemigen, carbocyclischen oder heterocyclischen, aromatischen oder aliphatischen Ring, der 1, 2 oder 3 der Heteroatome N, O und/oder S im Ring enthalten kann;
- M1: für ein- oder mehrwertige Metallatome, wie z.B. Cu, Co, Ni, Fe, Cr oder 2/3 Al steht; und
- M: für Wasserstoff, ein einwertiges Metall-Kation, ein Äquivalent eines mehrwertigen Metall-Kations oder ein gegebenenfalls mit (C₁-C₄)-Alkyl, (C₁-C₄)-Alkoxy-(C₁-C₄)-alkyl, Hydroxy-(C₁-C₄)-alkyl, Benzyl oder (C₆-C₁₀)-Aryl substituiertes Ammoniumion steht.
- M1: steht vorzugsweise für Cu.
- M: steht vorzugsweise für Wasserstoff, Natrium, Lithium oder Kalium.
- Y: steht vorzugsweise für Wasserstoff, Methyl, Ethyl, Methoxy oder Ethoxy. Halogen steht vorzugsweise für Chlor oder Brom.
- R¹: steht vorzugsweise für OH, CH=CH₂, CH₂CH₂OR² oder CH₂CH₂NR³R⁴.
- R²: steht vorzugsweise für Wasserstoff, SO₃M, Methyl, Ethyl, Acetyl, Phenyl, Chlorphenyl, Phenylsulfonsäure, Morpholinyl oder Pyridinyl.
- R³ und R⁴: stehen vorzugsweise für Wasserstoff, Methyl, Ethyl, Hydroxymethyl, Hydroxypropyl, Acetyl, Phenyl, Chlorphenyl, Phenylsulfonsäure, CH₂CH₂OM, CH₂CH₂SO₃M, CH₂COOH, CH₂CH₂COOM oder CH₃CHCOOM.
- R⁵: steht vorzugsweise für Methyl, Ethyl, Propyl, Butyl, Phenyl, CH₂CH₂CH₂SO₃M oder CH₂CH₂COOM.
- R⁶, R⁷, R⁸: stehen vorzugsweise für Wasserstoff, Methyl, Ethyl, CH₂CH₂OH, CH₂CH₂NH₂, oder R⁶ und/oder R⁷ stehen für COOM.
- R⁹: ist vorzugsweise ein 1-, 2-, oder 3-fach mit OH, O(C₁-C₆)-Alkyl, COOM, SO₃M und/oder NH₂ substituierter Phenyl- oder Naphthalin-Rest.
- R¹¹: ist vorzugsweise H, Methyl oder O(C₁-C₆)-Alkyl.
- R¹² und R¹³: sind vorzugsweise H, COOM oder SO₃M.
- R¹⁴: ist vorzugsweise ein 1-, 2- oder 3-fach mit OH, O(C₁-C₆)-Alkyl, COOM, SO₃M, NH₂, NH(C₆-C₁₀)-Aryl, NH(C₁-C₆)-Acyl und/oder Phenylsulfo substituierter Phenyl-, Naphthyl-, Pyridyl-, Pyridonyl- oder Pyrazolyl-Rest.
- M: ist vorzugsweise H, Na, K, Li, Ca/2 oder Ammonium.
in den Farbstoffen der Formel (5) ist das Metallatom vorzugsweise wie in Formel (5a) dargestellt gebunden. 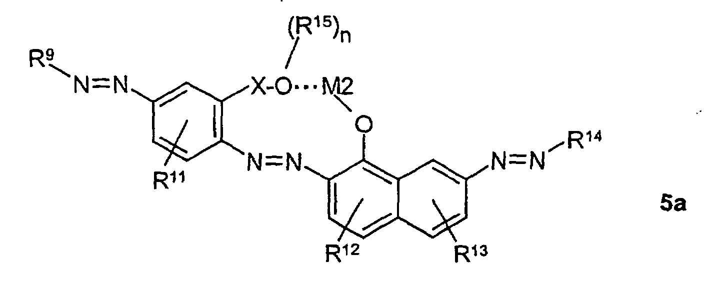 wobei
- M2: vorzugsweise ²/₃ Al, Cr, Fe, Co, Ni oder Cu, insbesondere Cu,
- R¹⁵: C₁-C₆-Alkyl,
- n: die Zahl 0 oder 1, und
- X: eine chemische Bindung, -CO- oder -SO₂-
und R⁹, R¹¹, R¹², R¹³, R¹⁴ und M die vorstehend genannten bevorzugten Bedeutungen haben.

Besonders bevorzugte Farbstoffe der Formel (5) sind die in der DE-A-100 15 004 beschriebenen Farbstoffe der Formeln:

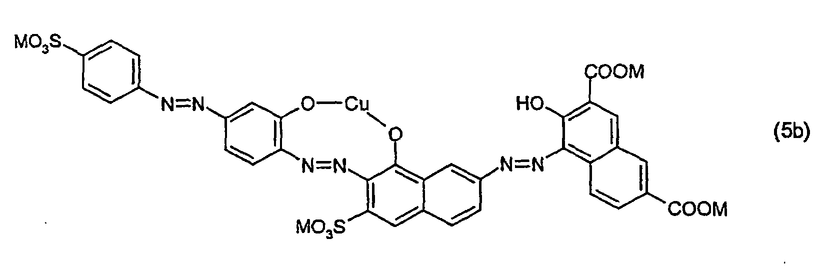

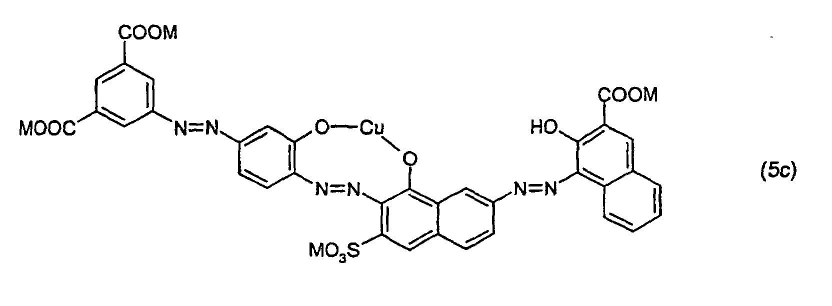

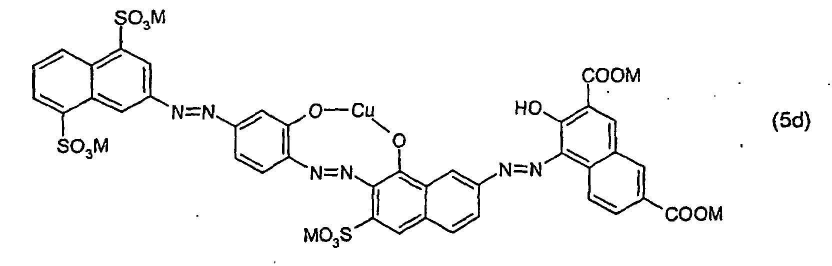

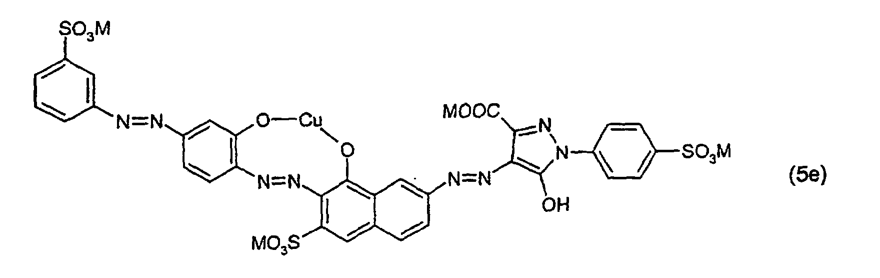

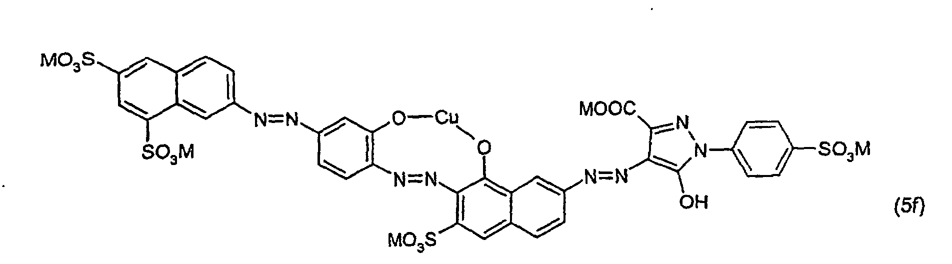

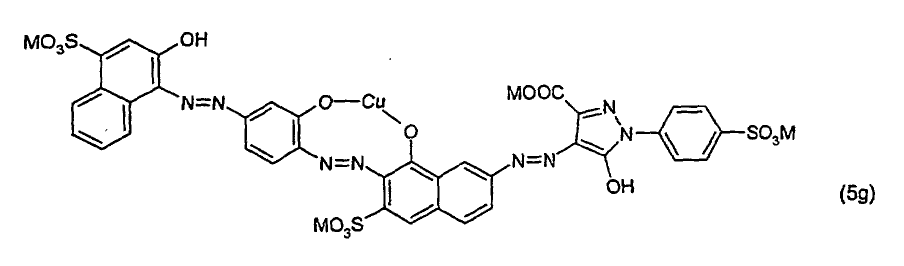

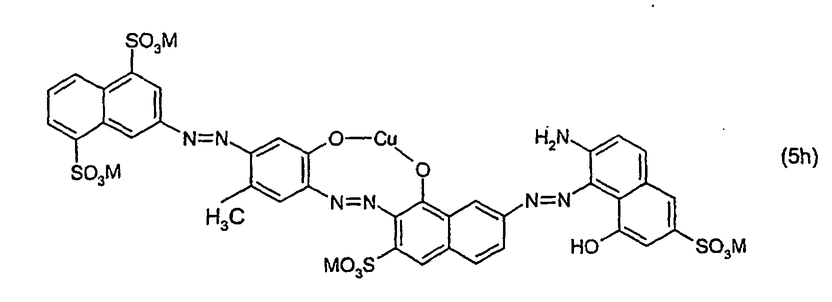

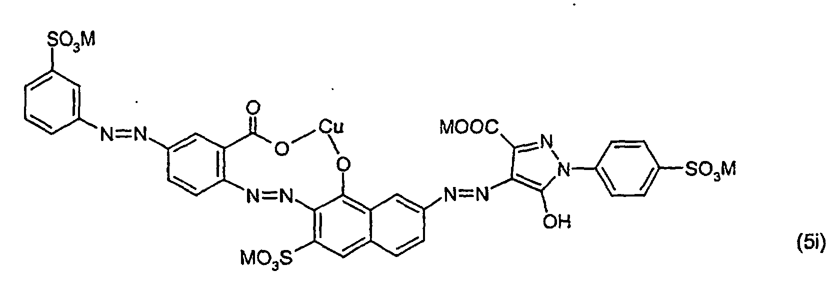

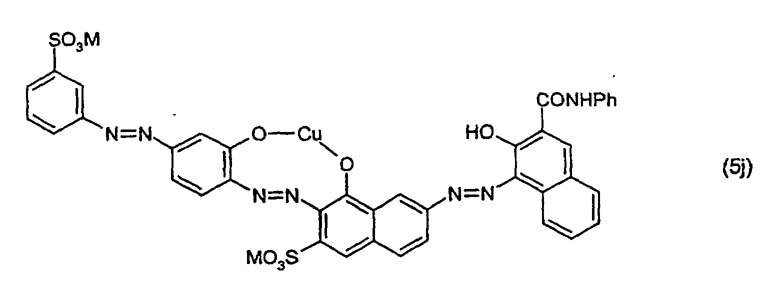

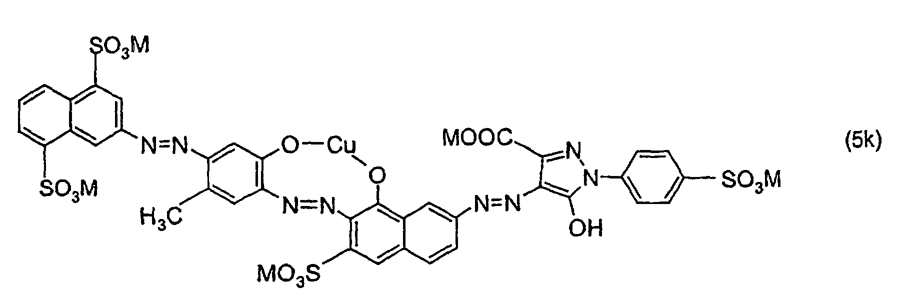

In den Farbstoffen der Formeln (4) und (5b) bis (5k) bedeutet M je nach pH-Wert vorzugsweise Wasserstoff und/oder Natrium.

Bevorzugte Mischungsverhältnisse zwischen den Verbindungen der Formel (4) und (5), bezogen auf Trockengewichte, liegen zwischen 100:1 und 1:100, vorzugsweise zwischen 50:1 und 1:50, insbesondere zwischen 10:1 und 1:10.

Die Verbindung der Formel (4) mit SO₂R¹ in meta-Position zur Azo-Brücke und mit Y gleich H, sowie mit R¹ gleich β-Sulfatoethyl und M1 gleich Cu, ist unter dem Namen C.I. Reactive Red 23 bekannt.

Die erfindungsgemäßen Farbstoffmischungen können, abhängig von den eingesetzten Farbstoffen, zusätzlich noch ein Nuancierfarbmittel enthalten, vorzugsweise aus der Gruppe C.I. Farbstoffe Acid Yellow 17 und 23, C.I. Direct Yellow 86, 98 und 132, C.I. Reactive Yellow 37, C.I. Pigment Yellow 17, 74, 83, 97, 120, 139, 151, 155 und 180; C.I. Direct Red 1, 11, 37, 62, 75, 81, 87, 89, 95, 227; C.I. Acid Red 1, 8, 80, 81, 82, 87, 94, 115, 131, 144, 152, 154, 186, 245, 249 und 289; C.I. Reactive Red 21, 22, 23, 35, 63, 106, 107, 112, 113, 114, 126, 127, 128, 129, 130, 131, 137, 160, 161, 174, 180; C.I. Pigment Red 122, 176, 184, 185 und 269; C.I. Direct Blue 199, C.I. Acid Blue 9, C.I. Pigment Blue 15:1-15:4. Das Nuancierfarbmittel ist vorzugsweise in einer Menge von 0,001 bis 5 Gew.-%, insbesondere von 0,01 bis 1 Gew.-%, bezogen auf das Trockengewicht der Gesamtfarbstoffmischung, enthalten.

Die erfindungsgemäßen Farbstoffmischungen können hergestellt werden, indem man die Farbstoffe der Formeln (4) und (5) und ggf. das Nuancierfarbmittel in den angegebenen Mischungsverhältnissen in Form trockener Pulver, ihrer Lösungen, wasser- oder lösemittelfeuchten Presskuchen und/oder Masterbatche miteinander mischt.

Gegenstand der vorliegenden Erfindung ist auch die Verwendung der genannten Mischungen zum Färben und Bedrucken von natürlichen und synthetischen Fasermaterialien (z.B. Polyester, Seide, Wolle, Mischgewebe), insbesondere zur Aufzeichnung von Schrift und Bildern auf verschiedenen Aufzeichnungsmedien, sowie zum Färben von Papier oder Zellstoffen in der Masse.

Für den Einsatz in Aufzeichnungsflüssigkeiten werden die beschriebenen Farbstoffe den genannten Anforderungen entsprechend aufbereitet. Die Farbstoffe können aus den zunächst erhaltenen, bevorzugt wässrigen Reaktionsgemischen durch Aussalzen und Filtrieren oder durch Sprühtrocknung, gegebenenfalls nach teilweiser oder vollständiger Entsalzung mittels Membranfiltration, isoliert werden. Es kann jedoch auch auf eine Isolierung verzichtet und die Farbstoffe enthaltenden Reaktionsmischungen durch Zusatz von organischen und/oder anorganischen Basen, eventuell Feuchthaltemitteln, Konservierungsmitteln und gegebenenfalls nach teilweiser oder vollständiger Entsalzung mittels Membranfiftration direkt in konzentrierte Farbstofflösungen überführt werden. Alternativ können die Farbstoffe auch als Presskuchen (gegebenenfalls auch in Flush-Verfahren) oder als Pulver eingesetzt werden. Vorteilhafterweise werden die erfindungsgemäßen Farbstoffmischungen in möglichst salzfreier Form, d.h. frei von NaCl oder anderen üblichen anorganischen Salzen, die bei der Synthese der Farbstoffe entstanden sind, eingesetzt.

Für konzentrierte Farbstofflösungen geeignete anorganische Basen sind beispielsweise Lithiumhydroxid, Lithiumcarbonat, Natriumhydroxid, Natriumhydrogencarbonat, Natriumcarbonat, Kaliumhydroxid, Kaliumcarbonat und Ammoniak. Geeignete organische Basen sind beispielsweise Monoethanolamin, Diethanolamin, Triethanolamin, 2-Aminopropanol, 3-Aminopropanol, Dipropanolamin, Tripropanolamin, N-Methylaminoethanol, N,N-Dimethylaminoethanol, N-Phenylaminopropanol, Ethylendiamin, Tetramethylethylendiamin, Tetramethylpropylendiamin, Tetramethylhexylendiamin, Diethylentriamin, Triethylentetramin, Triethylamin, Diisopropylethylamin und Polyethylenimin.

Für konzentrierte Farbstofflösungen geeignete Feuchthaltemittel sind beispielsweise Formamid, Harnstoff, Tetramethylhamstoff, ε-Caprolactam, Ethylenglykol, Diethylenglykol, Triethylenglykol, Polyethylenglykol, Butylglykol, Methylcellosolve, Glycerin, N-Methylpyrrolidon, 1,3-Diethyl-2-imidazolidinon, Natrium-Xylolsulfonat, Natrium-Cumolsulfonat und Natrium-Butylmonoglykolsulfat.

Die erfindungsgemäßen Farbstoffmischungen eignen sich besonders zur Herstellung von Aufzeichnungsflüssigkeiten, insbesondere von Tinten auf wässriger und nichtwässriger Basis für das Ink-Jet-Druckverfahren, sowie für solche Tinten, die nach dem Hot-melt Verfahren arbeiten oder auf Mikroemulsionen basieren, aber auch für sonstige Druck-, Vervielfältigungs-, Markierungs-, Schreib-, Zeichen-, Stempel- oder Registrierverfahren.

Gegenstand der vorliegenden Erfindung sind auch Aufzeichnungsflüssigkeiten, die eine erfindungsgemäße Farbstoffmischung und gegebenenfalls andere Farbmittel zum Nuancieren, wie vorstehend beschrieben, enthalten. Solche Nuancierfarbmittel sind zweckmäßigerweise in einer Menge von 0 bis 20 Gew.-%, vorzugsweise von 0,01 bis 10 Gew.-%, insbesondere von 0,1 bis 5 Gew.-%, bezogen auf das Gesamtgewicht der Aufzeichnungsflüssigkeit, enthalten. Die Zusammensetzung der Aufzeichnungsflüssigkeit muss dem jeweiligen Verwendungszweck angepasst werden.

Erfindungsgemäße Aufzeichnungsflüssigkeiten enthalten im allgemeinen insgesamt 0,1 bis 50 Gew.-% der besagten Mischung der Farbstoffe (4) und (5), und ggf. der Nuancierfarbmittel, gerechnet als Trockengewicht, 0 bis 99 Gew.-% Wasser und 0,5 bis 99,5 Gew.-% organisches Lösungsmittel und/oder Feuchthaltemittel. In einer bevorzugten Ausführungsform enthalten die Aufzeichnungsflüssigkeiten 0,5 bis
15 Gew.-% der besagten Farbstoffmischung, gerechnet als Trockengewicht, 35 bis 75 Gew.-% Wasser und 10 bis 50 Gew.-% organisches Lösungsmittel und/oder Feuchthaltemittel; in einer anderen bevorzugten Ausführungsform 0,5 bis
15 Gew.-% der besagten Farbstoffmischung, gerechnet als Trockengewicht, 0 bis 20 Gew.-% Wasser und 70 bis 99,5 Gew.-% organisches Lösungsmittel und/oder Feuchthaltemittel.

Zur Herstellung der Aufzeichnungsflüssigkeiten benutztes Wasser wird vorzugsweise in Form von destilliertem oder entsalztem Wasser eingesetzt. Bei den in den Aufzeichnungsflüssigkeiten enthaltenen Lösemitteln und/oder Feuchthaltemitteln kann es sich um ein organisches Lösemittel oder um ein Gemisch derartiger Lösemittel handeln, wobei mit Wasser mischbare Lösemittel bevorzugt sind. Geeignete Lösemittel sind beispielsweise ein- oder mehrwertige Alkohole, deren Ether und Ester, z.B. Methanol, Ethanol, Propanol, Isopropanol, Butanol, Isobutanol; zwei- oder dreiwertige Alkohole, insbesondere mit 2 bis 6 C-Atomen, z.B. Ethylenglykol, Propylenglykol, 1,3-Propandiol, 1,4-Butandiol, 1,5-Pentandiol, 1,6-Hexandiol, 1,2,6-Hexantriol, Glycerin, Diethylenglykol, Dipropylenglykol, Triethylenglykol, Polyethylenglykol, Tripropylenglykol, Polypropylenglykol; niedere Alkylether von mehrwertigen Alkoholen, wie z.B. Ethylenglykol-mono-methyl, -ethyl- oder -butyl-ether, Triethylenglykol-monomethyl- oder -ethyl-ether; Ketone und Ketonalkohole wie z.B. Aceton, Methylethylketon, Diethylketon, Methylisobutylketon, Methylpentylketon, Cyclopentanon, Cyclohexanon, Diacetonalkohol; Amide, wie z.B. Dimethylformamid, Dimethylacetamid, N-Methylpyrrolidon; femer Hamstoff, Tetramethylhamstoff, Thiodiglykol, ε-Caprolactam.

Weiter können die erfindungsgemäßen Aufzeichnungsflüssigkeiten noch übliche Zusatzstoffe enthalten, beispielsweise Konservierungsmittel, kationische, anionische oder nichtionogene oberflächenaktive Substanzen (Tenside und Netzmittel), sowie Mittel zur Regulierung der Viskosität, z.B. Polyvinylalkohol, Cellulosederivate, oder wasserlösliche natürliche oder künstliche Harze als Filmbildner bzw. Bindemittel zur Erhöhung der Haft- und Abriebfestigkeit. Des weiteren können Lichtschutzmittel enthalten sein.

Weiterhin können Amine, wie z. B. Ethanolamin, Diethanolamin, Triethanolamin, N,N-Dimethylethanolamin, Diisopropylamin, zur Erhöhung des pH-Wertes der Aufzeichnungsflüssigkeit enthalten sein, normalerweise zu 0 bis 10 Gew.-%, vorzugsweise 0,5 bis 5 Gew.-%, bezogen auf das Gesamtgewicht der Aufzeichnungsflüssigkeit.

Den Aufzeichnungsflüssigkeiten für das Ink-Jet-Druckverfahren können je nach Ausführungsform dieses Druckverfahrens, z.B. als Continuous-Jet-, Intermittent-Jet-, Impuls-Jet- oder Compound-Jet-Verfahren, noch weitere Additive, z.B..zur Pufferung des pH-Wertes, zur Einstellung der elektrischen Leitfähigkeit, der spezifischen Wärme, des thermischen Expansionskoeffizienten und der Leitfähigkeit, zugesetzt werden.

Bei der Lagerung erfindungsgemäßer Aufzeichnungsflüssigkeiten tritt keine Abscheidung von Niederschlägen auf, welche zu unscharfen Druckbildem oder zur Verstopfung von Düsen führt.
Die erfindungsgemäßen Aufzeichnungsflüssigkeiten liegen hinsichtlich Viskosität und Oberflächenspannung in den für Ink-Jet-Verfahren geeigneten Bereichen. Sie liefern Druckbilder hoher optischer Dichte mit ausgezeichneter Licht- und Wasserechtheit.

Des weiteren kann die erfindungsgemäße Farbstoffmischung als Tinten-Set in Kombination mit Magenta-, Gelb- und/oder Cyan-Farbmitteln eingesetzt werden. Bei den Magenta-, Gelb- und Cyan-Tönen handelt es sich sowohl um Farbstoffe, wie z.B. die C.I. Farbstoffe Acid Yellow 17, C.I. Acid Yellow 23, C.I. Direct Yellow 86,
C.I. Direct Yellow 98, C.I. Direct Yellow 132, C.I. Reactive Yellow 37, C.I. Reactive Red 23, C.I. Reactive Red 180, C.I. Acid Red 52, C.I. Acid Blue 9, C.I. Direct Blue 199, als auch um Pigmente, wie C.I. Pigment Yellow 17, C.I. Pigment Yellow 74, C.I. Pigment Yellow 83, C.I. Pigment Yellow 97, C.I. Pigment Yellow 120, C.I. Pigment Yellow 139, C.I. Pigment Yellow 151, C.I. Pigment Yellow 155, C.I. Pigment Yellow 180, C.I. Pigment Red 122, C.I. Pigment Red 176, C.I. Pigment Red 184, C.I. Pigment Red 185 und C.I. Pigment Red 269, C.I. Pigment Violet 19, C.I. Pigment Blue 15, C.I. Pigment Blue 15:3, C.I. Pigment Blue 15:4.

Weiterhin sind die erfindungsgemäßen Farbstoffmischungen als Farbmittel in elektrophotographischen Tonern und Entwicklern, wie z.B. Einkomponenten- und Zweikomponentenpulvertonern, Magnettonem, Flüssigtonem, Polymerisationstonern sowie anderen Spezialtonern geeignet.

Typische Tonerbindemittel sind Polymerisations-, Polyadditions- und Polykondensationsharze, wie Styrol- Styrolacrylat-, Styrolbutadien-, Acrylat-, Polyester-, Phenol-Epoxidharze, Polysulfone, Polyurethane; einzeln oder in Kombination, sowie Polyethylen und Polypropylen, die noch weitere Inhaltsstoffe, wie Ladungssteuermittel, Wachse oder Fließmittel, enthalten können oder im Nachhinein zugesetzt bekommen können.
Des weiteren sind die erfindungsgemäßen Farbstoffmischungen als Farbmittel in Pulver und Pulverlacken geeignet, insbesondere in triboelektrisch oder elektrostatisch versprühten Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen.

Als Pulverlackharze werden typischerweise Epoxidharze carboxyl- und hydroxylgruppenhaltige Polyesterharze, Polyurethane- und Acrylharze zusammen mit üblichen Härtem eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt.

Außerdem sind die erfindungsgemäßen Farbstoffmischungen als Farbmittel für Farbfilter, sowohl für die additive wie für die subtraktive Farberzeugung (P. Gregory "Topics in Applied Chemistry: High Technology Applications of Organic Colorants" Plenum Press, New York 1991, Seite 15-25), sowie als Farbmittel in Electronic Inks für sogenannte "Electronic Newspapers" geeignet.

Auch in den vorstehend beschriebenen Anwendungsgebieten können die erfindungsgemäßen Farbstoffmischungen zusätzlich mit anderen Farbstoffen und/oder Pigmenten nuanciert werden, wie z.B. mit C.I. Acid Yellow 17 und 23, C.I. Direct Yellow 86, 98 und 132, C.I. Reactive Yellow 37, C.I. Pigment Yellow 17, 74, 83, 97, 120, 139, 151, 155 und 180, C.I. Direct Red 1, 11, 37, 62, 75, 81, 87, 89, 95, 227; C.I. Acid Red 1, 8, 87, 94, 115, 131, 144, 152, 154, 186, 245, 249 und 289; C.I. Reactive Red 21, 22, 23, 35, 63, 106, 107, 112, 113, 114, 126, 127, 128, 129, 130, 131, 137, 160, 161, 174, 180; C.I. Pigment Red 122, 176, 184, 185 und 269; , C.I. Acid Blue 9, C.I. Direct Blue 199, C.I. Pigment Violet 19, C.I. Pigment Blue 15, 15:3, 15:4.

In den nachstehenden Beispielen zur Herstellung von Aufzeichnungsflüssigkeiten wird die Lichtechtheit nach DIN 54003 (blaue Wollskala) bestimmt. Dabei bedeutet 1 sehr gering, 2 gering, 3 mäßig, 4 ziemlich gut, 5 gut, 6 sehr gut.

Weiterhin hat bei den eingesetzten Farbstoffen M die Bedeutung Wasserstoff und/oder Natrium (je nach pH-Wert) und bei dem Farbstoff der Formel (4) ist M1 gleich Cu.

### Beispiel 1:

Man stellt jeweils eine 10 gew.-%ige salzfreie wässrige Lösung des Farbstoffes mit der allgemeinen Formel (4) (mit R¹ = CH₂CH₂NR³R⁴, R³ = H, R⁴ = CH₂CO₂M und Y = H; SO₂R¹ ist in meta-Stellung zur Azobrücke) und der Formel (5k) her.

Anschließend werden bei Raumtemperatur 500 ml der Farbstofflösung (4) mit 4500 ml der Farbstofflösung (5c) gemischt. Die so erhaltene Farbstofflösung wird mit 11 g ®Proxel GXL konserviert.
Absorptionsspektrum in Wasser: λₘₐₓ = 420/602 nm;
Lichtechtheit: 5 (blaue Wollskala);
Lagerstabilitätstest: keine Feststoffpartikel nach 6 Wochen bei 50°C sowie 10
Tage bei -20°C (nach jeweiligem Abkühlen/Auftauen auf Raumtemperatur).
Oberflächenspannung: >50 mN/m (4 %ige wässrige Tinte).

### Beispiel 2:

Man mischt 200 ml einer 10 gew.-%igen salzfreien Lösung des Farbstoffes mit der allgemeinen Formel (4) (mit R¹ = CH₂CH₂NR³R⁴, R³ = H, R⁴ = CH₂CH₂SO₃M und
Y = H; SO₂R¹ ist in meta-Stellung zur Azobrücke) mit 1800 ml einer ebenfalls entsalzten 10 gew.-%igen Lösung von (5k). Zur Konservierung der Farblösung werden 0,2 Vol-% ®Mergal K10 N zugesetzt.
Absorptionsspektrum in Wasser λₘₐₓ = 428/606 nm;
Lichtechtheit: 5;
Lagerstabilität: keine Feststoffpartikel nach 6 Wochen bei 50°C sowie 10 Tage
bei -20°C (nach jeweiligem Abkühlen/Auftauen auf Raumtemperatur).
Oberflächenspannung: >50 mN/m (4 %ige wässrige Tinte).

### Beispiel 3:

Zu 100 ml einer 10 gew.-%igen salzfreien Lösung des Farbstoffes mit der allgemeinen Formel (4) (mit R¹ = CH₂CH₂NR³R⁴, R³ = H, R⁴ = CH₂CH₂OM und
Y = H; SO₂R¹ ist in meta-Stellung zur Azobrücke), gibt man 1000ml einer ebenfalls entsalzten 10 gew.-%igen Lösung von (5k). Der pH-Wert der Lösung wird auf 6,5-8,5 eingestellt. Die Farbstofflösung wird mit 0,2 Vol-% ®Proxel GXL konserviert.
Absorptionsspektrum in Wasser: λₘₐₓ = 420/600 nm;
Lichtechtheit: 5;
Lagerstabilität: keine Feststoffpartikel nach 4 Wochen bei 50°C sowie 10 Tage
bei -20°C (nach jeweiligem Abkühlen/Auftauen auf Raumtemperatur).
Oberflächenspannung: >50 mN/m (4 %ige wässrige Tinte).

### Beispiel 4:

Man stellt jeweils eine 10 gew.-%ige salzfreie wässrige Lösung des Farbstoffes mit der allgemeinen Formel (4) (mit R¹ = CH₂CH₂NR³R⁴, R³ = H, R⁴ = CH₂CO₂M und
Y = H; SO₂R¹ ist in meta-Stellung zur Azobrücke) und der Formel (5f) her.
Anschließend werden bei Raumtemperatur 500 ml der Farbstofflösung (4) mit 4500 ml der Farbstofflösung (5f) gemischt. Die so erhaltene Farbstofflösung wird mit 11 g ®Proxel GXL konserviert.
Absorptionsspektrum in Wasser: λₘₐₓ = 425/590 nm;
Lichtechtheit: 5 (blaue Wollskala);
Lagerstabilitätstest: keine Feststoffpartikel nach 6 Wochen bei 50°C sowie 10 Tage bei -20°C (nach jeweiligem Abkühlen/Auftauen auf Raumtemperatur);
Oberflächenspannung: >50 mN/m (4 %ige wässrige Tinte).

### Beispiel 5:

Man mischt 200 ml einer 10 gew.-%igen salzfreien Lösung des Farbstoffes mit der allgemeinen Formel (4) (mit R¹ = CH₂CH₂NR³R⁴, R³ = H, R⁴ = CH₂CH₂SO₃M und
Y = H; SO₂R¹ ist in meta-Stellung zur Azobrücke) mit 1800 ml einer ebenfalls entsalzten 10 gew.-%igen Lösung von (5f). Zur Konservierung der Farblösung werden 0,2 Vol-% ®Mergal K10 N zugesetzt.
Absorptionsspektrum in Wasser: λₘₐₓ = 422/586 nm;
Lichtechtheit: 5;
Lagerstabilität: keine Feststoffpartikel nach 6 Wochen bei 50°C sowie 10 Tage
bei -20°C (nach jeweiligem Abkühlen/Auftauen auf Raumtemperatur). Oberflächenspannung: >50 mN/m (4 %ige wässrige Tinte).

### Beispiel 6:

Zu 100 ml einer 10 gew.-%igen salzfreien Lösung des Farbstoffes mit der allgemeinen Formel (4) (mit R¹ = CH₂CH₂NR³R⁴, R³ = H, R⁴ = CH₂CH₂OM und
Y = H; SO₂R¹ ist in meta-Stellung zur Azobrücke), gibt man 1000 ml einer ebenfalls entsalzten 10 gew.-%igen Lösung von (5f). Der pH-Wert der Lösung wird auf
6,5-8,5 eingestellt. Die Farbstofflösung wird mit 0,2 Vol-% ®Proxel GXL konserviert.
Absorptionsspektrum in Wasser: λₘₐₓ = 417/598 nm;
Lichtechtheit: 5;
Lagerstabilität: keine Feststoffpartikel nach 4 Wochen bei 50°C sowie 10 Tage
bei -20°C (nach jeweiligem Abkühlen/Auftauen auf Raumtemperatur).
Oberflächenspannung: >50 mN/m (4 %ige wässrige Tinte).

### Beispiel 7:

Man mischt 200 ml einer 10 gew.-%igen salzfreien Lösung des Farbstoffes mit der allgemeinen Formel (4) (mit R¹ = CH₂CH₂NR³R⁴, R³ = H, R⁴ = CH₂CO₂M und
Y = H; SO₂R¹ ist in meta-Stellung zur Azobrücke) mit 2000 ml einer ebenfalls entsalzten 10 gew.-%igen Lösung von (5f). Zur Konservierung der Farbstofflösung werden 0,2 Vol-% ®Mergal K10 N zugesetzt.
Absorptionsspektrum in Wasser λₘₐₓ = 426/588 nm;
Lichtechtheit: 5;
Lagerstabilität: keine Feststoffpartikel nach 6 Wochen bei 50°C sowie 10 Tage
bei -20°C (nach jeweiligem Abkühlen/Auftauen auf Raumtemperatur).
Oberflächenspannung: >50 mN/m (4 %ige wässrige Tinte).

### Beispiel 8:

Man mischt 200 ml einer 10 gew.-%igen salzfreien Lösung des Farbstoffes mit der allgemeinen Formel (4) (mit R¹ = CH₂CH₂NR³R⁴, R³ = H, R⁴ = CH₂CO₂M und
Y = H; SO₂R¹ ist in meta-Stellung zur Azobrücke) mit 1800 ml einer ebenfalls entsalzten 10 gew.-%igen Lösung von (5f). Zusätzlich werden 20 ml einer
10 gew.-%igen salzfreien C.I. Acid Red 52 Lösung zugefügt. Zur Konservierung der Farbstofflösung werden 0,2 Vol-% ®Mergal K10 N zugesetzt.
Absorptionsspektrum in Wasser: λₘₐₓ = 438/582 nm;
Lichtechtheit: 5;
Lagerstabilität: keine Feststoffpartikel nach 6 Wochen bei 50°C sowie 10 Tage
bei -20°C (nach jeweiligem Abkühlen/Auftauen auf Raumtemperatur).
Oberflächenspannung: >50 mN/m (4 %ige wässrige Tinte).

### Beispiel 9:

Man mischt 200 ml einer 10 gew.-%igen salzfreien Lösung des Farbstoffes mit der allgemeinen Formel (4) (mit R¹ = CH₂CH₂OSO₃M und Y = H; SO₂R¹ ist in meta-Stellung zur Azobrücke) mit 2000 ml einer ebenfalls entsalzten 10 gew.-%igen Lösung von (5f). Zur Konservierung der Farbstofflösung werden 0,2 Vol-% ®Proxel GXL zugesetzt.
Absorptionsspektrum in Wasser: λₘₐₓ = 419/593 nm;
Lichtechtheit: 5;
Lagerstabilität: keine Feststoffpartikel nach 6 Wochen bei 50°C sowie 10 Tage
bei -20°C (nach jeweiligem Abkühlen/Auftauen auf Raumtemperatur).
Oberflächenspannung: >50 mN/m (4 %ige wässrige Tinte).

### Beispiel 10:

Zu 100 ml einer 10 gew.-%igen salzfreien Lösung des Farbstoffes mit der allgemeinen Formel (4) (mit R¹ = CH₂CH₂NR³R⁴, R³ = H, R⁴ = CH₂CH₂OM und
Y = H; SO₂R¹ ist in meta-Stellung zur Azobrücke), gibt man 1000 ml einer ebenfalls entsalzten 10 gew.-%igen Lösung von (5e). Der pH-Wert der Lösung wird auf
6,5-8,5 eingestellt. Die Farbstofflösung wird mit 0,15 Vol-% ®Proxel GXL konserviert.
Absorptionsspektrum in Wasser: λₘₐₓ = 410/592 nm;
Lichtechtheit: 5;
Lagerstabilität: keine Feststoffpartikel nach 4 Wochen bei 50°C sowie 10 Tage bei -20°C (nach jeweiligem Abkühlen/Auftauen auf Raumtemperatur). Oberflächenspannung: >50 mN/m (4 %ige wässrige Tinte).

## Patentansprüche

1. Farbstoffmischung, bestehend im wesentlichen aus einem oder mehreren Farbstoffen der Formel (4) und einem oder mehreren Farbstoffen der Formel (5) 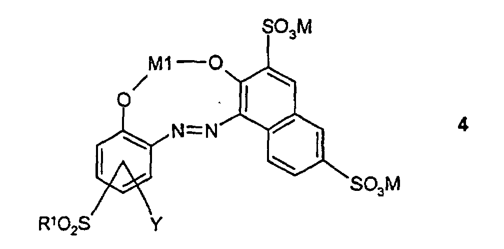 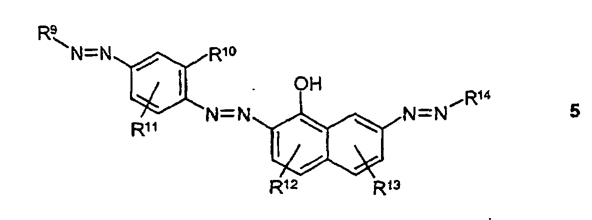
Y H, (C₁-C₆)-Alkyl, (C₁-C₆)-Alkoxy oder Halogen;
R¹ OM, CH=CH₂, CH₂CH₂OR², CH₂CH₂NR³R⁴, CH₂CH₂SR⁵ oder CH₂CH₂CR⁶R⁷R⁸ bedeutet,
R² H, SO₃M, (C₁-C₆)-Alkyl, durch ein oder mehrere Reste aus der Gruppe OH, NH₂, COOM und SO₃M substituiertes (C₁-C₆)-Alkyl; (C₁-C₆)-Acyl, (C₆-C₁₀)-Aryl, durch ein oder mehrere Reste aus der Gruppe Halogen, OH, NH₂, COOM und SO₃M substituiertes (C₆-C₁₀)-Aryl, oder 5-10-gliedrige Heterocyclen mit 1 bis 4 Heteroatomen aus der Gruppe O, N und S, darstellen;
R³ und R⁴ unabhängig voneinander H, (C₁-C₆)-Alkyl, durch ein oder mehrere Reste aus der Gruppe OH, NH₂, COOM und SO₃M substituiertes (C₁-C₆)-Alkyl, (C₁-C₆)-Acyl, (C₆-C₁₀)-Aryl, durch ein oder mehrere Reste aus der Gruppe OH, Halogen, NH₂, COOM und SO₃M substituiertes (C₆-C₁₀)-Aryl, darstellen; oder NR³R⁴ einen Heterocyclus bildet;
R⁵ (C₁-C₆)-Alkyl, durch ein oder mehrere Reste aus der Gruppe OH, NH₂, COOM und SO₃M substituiertes (C₁-C₆)-Alkyl, (C₁-C₆)-Acyl, (C₆-C₁₀)-Aryl, durch ein oder mehrere Reste aus der Gruppe OH, Halogen, NH₂, COOM und SO₃M substituiertes (C₆-C₁₀)-Aryl, darstellt, oder SR⁵ einen Heterocyclus bildet;
R⁶, R⁷, R⁸ unabhängig voneinander für H, (C₁-C₆)-Alkyl oder für durch ein oder mehrere Reste aus der Gruppe Halogen, OM, NH₂, COOCH₃, COOM und SO₃M substituiertes (C₁-C₆)-Alkyl stehen; oder ein oder zwei der Reste R⁶, R⁷, R⁸ für COOM stehen;
R⁹ einen einfach oder mehrfach mit OM, O(C₁-C₆)-Alkyl, O(C₁-C₆)-Alkyl-COOM, O(C₁-C₆)-Alkyl-SO₃M, O(Hydroxy(C₁-C₆)-Alkyl), (C₁-C₆)-Alkyl, COOM, SO₃M, SO₂NH₂, SO₂N(Hydroxy(C₁-C₆)-Alkyl)₂, SO₂NH(C₁-C₆)-Alkyl, SO₂N((C₁-C₆)-Alkyl)₂, NH₂, NH(C₁-C₆)-Alkyl, NH(C₁-C₆)-Acyl, NH(C₆-C₁₀)-Aryl, N(Hydroxy(C₁-C₆)-Alkyl)₂, N((C₁-C₆)-Alkyl)₂ und/oder Halogen substituierten (C₆-C₁₄)-Arylrest darstellt; .
R¹⁰ für OM, O(C₁-C₆)-Alkyl, COOM, SO₃M, COO(C₁-C₆-alkyl) oder SO₃(C₁-C₆-alkyl);
R¹¹, R¹² und R¹³ gleich oder verschieden sind und für H, OM, O(C₁-C₆)-Alkyl, O(C₁-C₆)-Alkyl-COOM, O(C₁-C₆)-Alkyl-SO₃M, O(Hydroxy(C₁-C₆)-Alkyl), (C₁-C₆)-Alkyl, COOM, SO₃M, SO₂NH₂, SO₂N(Hydroxy(C₁-C₆)-Alkyl)₂, SO₂NH(C₁-C₆)-Alkyl, SO₂N((C₁-C₆)-Alkyl)₂, NH₂, NH(C₁-C₆)-Alkyl, NHAcyl, NH(C₆-C₁₄)-Aryl, N(Hydroxy(C₁-C₆)-Alkyl)₂, N((C₁-C₆)-Alkyl)₂, oder Halogen stehen,
R¹⁴ für einen unsubstituierten oder für einen einfach oder mehrfach mit OM, (C₁-C₆)-Alkyl, O(C₁-C₆)-Alkyl-COOM, O(C₁-C₆)-Alkyl-SO₃M, O(Hydroxy(C₁-C₆)-Alkyl), (C₁-C₆)-Alkyl, COOM, SO₃M, SO₂NH₂, CONH-Phenyl, SO₂NH-Phenyl, SO₂N(Hydroxy(C₁-C₆)-Alkyl)₂, SO₂NH(C₁-C₆)-Alkyl, SO₂N((C₁-C₆)-Alkyl)₂, NH₂, NH(C₁-C₆)-Alkyl, NH(C₁-C₆)-Acyl, NH(C₆-C₁₀)-Aryl, N(Hydroxy(C₁-C₆)-Alkyl)₂, N((C₁-C₆)-Alkyl)₂, Halogen und/oder Phenylsulfo substituierten ein- oder zweikemigen, carbocyclischen oder heterocyclischen, aromatischen oder aliphatischen Ring, der 1, 2 oder 3 der Heteroatome N, O und/oder S im Ring enthalten kann;
M1 für ein ein- oder mehrwertiges Metallatom steht; und
M für Wasserstoff, ein einwertiges Metall-Kation, ein Äquivalent eines mehrwertigen Metall-Kations oder ein gegebenenfalls mit (C₁-C₄)-Alkyl, (C₁-C₄)-Alkoxy-(C₁-C₄)-alkyl, Hydroxy-(C₁-C₄)-alkyl, Benzyl oder (C₆-C₁₀)-Aryl substituiertes Ammoniumion steht.

2. Farbstoffmischung nach Anspruch 1, **dadurch gekennzeichnet, dass**
R² für Wasserstoff, SO₃M, Methyl, Ethyl, Acetyl, Phenyl, Chlorphenyl, Phenylsulfonsäure, Morpholinyl oder Pyridinyl steht.

3. Farbstoffmischung nach Anspruch 1, **dadurch gekennzeichnet, dass**
R³ und R⁴ für Wasserstoff, Methyl, Ethyl, Hydroxymethyl, Hydroxypropyl, Acetyl, Phenyl, Chlorphenyl, Phenylsulfonsäure, CH₂CH₂OM, CH₂CH₂SO₃M, CH₂COOH, CH₂CH₂COOM oder CH₃CHCOOM stehen.

4. Farbstoffmischung nach einem oder mehreren der Ansprüche 1 bis 3, **dadurch gekennzeichnet, dass** der Farbstoff der Formel (5) eine Verbindung der Formel (5a) ist 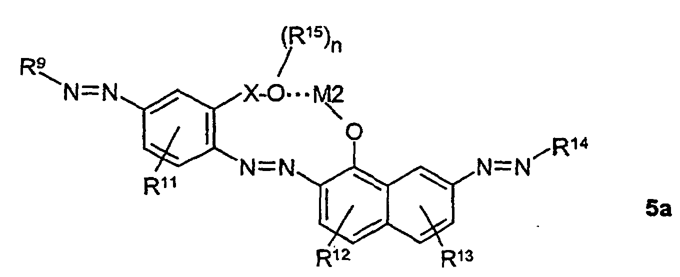 wobei
M2 ²/₃ Al, Cr, Fe, Co, Ni oder Cu,
R¹⁵ C₁-C₆-Alkyl,
n die Zahl 0 oder 1,
X eine chemische Bindung, -CO- oder -SO₂- ,
R⁹ ein 1-, 2- oder 3-fach mit OH, O(C₁-C₆)-Alkyl, COOM, SO₃M und/oder NH₂ substituierter Phenyl- oder Naphthalin-Rest,
R¹¹ H, Methyl oder O(C₁-C₆)-Alkyl,
R¹² und R¹³ H, COOM oder SO₃M,
R¹⁴ ein 1-, 2- oder 3-fach mit OH, O(C₁-C₆)-Alkyl, COOM, SO₃M, NH₂, NH(C₆-C₁₀)-Aryl, NH(C₁-C₆)-Acyl und/oder Phenylsulfo substituierter Phenyl-, Naphthyl-, Pyridyl-, Pyridonyl- oder Pyrazolyl-Rest, und
M H, Na, K, Li, Ca/2 oder Ammonium bedeuten.

5. Farbstoffmischung nach einem oder mehreren der Ansprüche 1 bis 3, **dadurch gekennzeichnet, dass** das Mischungsverhältnis zwischen den Farbstoffen der Formel (4) und (5), bezogen auf Trockengewichte, 100:1 bis 1:100, vorzugsweise 10:1 bis 1:10, ist.

6. Farbstoffmischung nach einem oder mehreren der Ansprüche 1 bis 5, **dadurch gekennzeichnet, dass** zusätzlich ein Nuancierfarbmittel aus der Gruppe C.I. Acid Yellow 17, 23, C.I. Direct Yellow 86, 98, 132, C.I. Reactive Yellow 37, C.I. Pigment Yellow 17, 74, 83, 97, 120, 139, 151, 155 und 180, C.I. Direct Red 1, 11, 37, 62, 75, 81, 87, 89, 95, 227; C.I. Acid Red 1, 8, 87, 94, 115, 131, 144, 152, 154, 186, 245, 249, 289; C.I. Reactive Red 21, 22, 23, 35, 63, 106, 107, 112, 113, 114, 126, 127, 128, 129, 130, 131, 137, 160, 161, 174, 180; C.I. Pigment Red 122, 176, 184, 185, 269;, C.I. Acid Blue 9, C.I. Direct Blue 199, C.I. Pigment Violet 19, C.I. Pigment Blue 15, 15:3, 15:4 enthalten ist.

7. Verfahren zur Herstellung einer Farbstoffmischung nach mindestens einem der Ansprüche 1 bis 6, **dadurch gekennzeichnet, dass** man die Farbstoffe der Formeln (4) und (5), und ggf. das Nuancierfarbmittel in Form trockener Pulver, ihrer Lösungen, wasser- oder lösemittelfeuchten Presskuchen und/oder Masterbatche miteinander mischt.

8. Verwendung einer Farbstoffmischung nach mindestens einem der Ansprüche 1 bis 6 zum Färben und Bedrucken von natürlichen und synthetischen Fasermaterialien, zur Aufzeichnung von Schrift und Bildern auf einem Aufzeichnungsmedium und zum Färben von Papier oder Zellstoff in der Masse.

9. Aufzeichnungsflüssigkeit, enthaltend eine Farbstoffmischung nach einem oder mehreren der Ansprüche 1 bis 6.

10. Aufzeichnungsflüssigkeit nach Anspruch 9, bestehend im wesentlichen aus 0,1 bis 50 Gew.-% der Farbstoffmischung, gerechnet als Trockengewicht, 0 bis 99 Gew.-% Wasser und 0,5 bis 99,5 Gew.-% organisches Lösungsmittel und/oder Feuchthaltemittel.

11. Verwendung der Aufzeichnungsflüssigkeit nach Anspruch 9 oder 10 als Ink-Jet-Tinte.

12. Tintenset, bestehend aus jeweils mindestens einer magentafarbenen Aufzeichnungsflüssigkeit, einer gelben Aufzeichnungsflüssigkeit, einer cyanfarbenen Aufzeichnungsflüssigkeit und einer schwarzen Aufzeichnungsflüssigkeit nach Anspruch 9 oder 10.

## Claims

1. A dye mixture consisting essentially of one or more dyes of the formula (4) and one or more dyes of the formula (5) 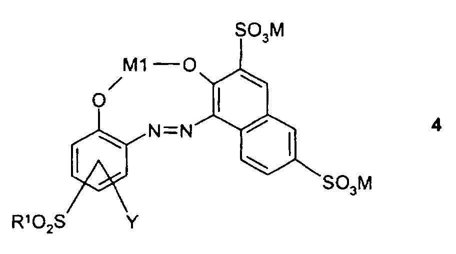 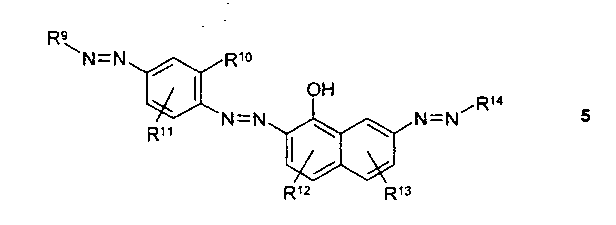 in which
Y is H, (C₁-C₆)-alkyl, (C₁-C₆)-alkoxy or halogen;
R¹ is OM, CH=CH₂, CH₂CH₂OR², CH₂CH₂NR³R⁴, CH₂CH₂SR⁵ or CH₂CH₂CR⁶R⁷R⁸,
R² is H, SO₃M, (C₁-C₆)-alkyl, (C₁-C₆)-alkyl substituted by one or more radicals from the group consisting of OH, NH₂, COOM and SO₃M; (C₁-C₆)-acyl, (C₆-C₁₀)-aryl, (C₆-C₁₀)-aryl substituted by one or more radicals from the group consisting of halogen, OH, NH₂, COOM and SO₃M; or 5-10-membered heterocycles containing from 1 to 4 heteroatoms from the group consisting of O, N and S;
R³ and R⁴ independently of one another are H, (C₁-C₆)-alkyl, (C₁-C₆)-alkyl substituted by one or more radicals from the group consisting of OH, NH₂, COOM and SO₃M; (C₁-C₆)-acyl, (C₆-C₁₀)-aryl, (C₆-C₁₀)-aryl substituted by one or more radicals from the group consisting of OH, halogen, NH₂, COOM and SO₃M; or NR³R⁴ forms a heterocycle;
R⁵ is (C₁-C₆)-alkyl, (C₁-C₆)-alkyl substituted by one or more radicals from the group consisting of OH, NH₂, COOM and SO₃M, (C₁-C₆)-acyl, (C₆-C₁₀)-aryl, (C₆-C₁₀)-aryl substituted by one or more radicals from the group consisting of OH, halogen, NH₂, COOM and SO₃M, or SR⁵ forms a heterocycle;
R⁶, R⁷ and R⁸ independently of one another are H, (C₁-C₆)-alkyl or (C₁-C₆)-alkyl substituted by one or more radicals from the group consisting of halogen, OM, NH₂, COOCH₃, COOM and SO₃M; or one or two of the radicals R⁶, R⁷ and R⁸ is or are COOM;
R⁹ is a (C₆-C₁₄)-aryl radical substituted one or more times by OM, O(C₁-C₆)-alkyl, O(C₁-C₆)-alkyl-COOM, O(C₁-C₆)-alkyl-SO₃M, O(hydroxy(C₁-C₆)-alkyl), (C₁-C₆)-alkyl, COOM, SO₃M, SO₂NH₂, SO₂N(hydroxy(C₁-C₆)-alkyl)₂, SO₂NH(C₁-C₆)-alkyl, SO₂N((C₁-C₆)-alkyl)₂, NH₂, NH(C₁-C₆)-alkyl, NH(C₁-C₆)-acyl, NH(C₆-C₁₀)-aryl, N(hydroxy(C₁-C₆)-alkyl)₂, N((C₁-C₆)-alkyl)₂ and/or halogen;
R¹⁰ is OM, O(C₁-C₆)-alkyl, COOM, SO₃M, COO(C₁-C₆-alkyl) or SO₃(C₁-C₆-alkyl);
R¹¹, R¹² and R¹³ are identical or different and are H, OM, O(C₁-C₆)-alkyl, O(C₁-C₆)-alkyl-COOM, O(C₁-C₆)-alkyl-SO₃M, O(hydroxy(C₁-C₆)-alkyl), (C₁-C₆)-alkyl, COOM, SO₃M, SO₂NH₂, SO₂N(hydroxy(C₁-C₆)-alkyl)₂, SO₂NH(C₁-C₆)-alkyl, SO₂N((C₁-C₆)-alkyl)₂, NH₂, NH(C₁-C₆)-alkyl, NHacyl, NH(C₆-C₁₄)-aryl, N(hydroxy(C₁-C₆)-alkyl)₂, N((C₁-C₆)-alkyl)₂, or halogen,
R¹⁴ is a monocyclic or bicyclic, carbocyclic or heterocyclic, aromatic or aliphatic ring which is unsubstituted or substituted one or more times by OM, (C₁-C₆)-alkyl, O(C₁-C₆)-alkyl-COOM, O(C₁-C₆)-alkyl-SO₃M, O(hydroxy(C₁-C₆)-alkyl), (C₁-C₆)-alkyl, COOM, SO₃M, SO₂NH₂, CONH-phenyl, SO₂NH-phenyl, SO₂N(hydroxy(C₁-C₆)-alkyl)₂, SO₂NH(C₁-C₆)-alkyl, SO₂N((C₁-C₆)-alkyl)₂, NH₂, NH(C₁-C₆)-alkyl, NH(C₁-C₆)-acyl, NH(C₆-C₁₀)-aryl, N(hydroxy(C₁-C₆)-alkyl)₂, N((C₁-C₆)-alkyl)₂, halogen and/or phenylsulfo and can contain 1, 2 or 3 of the heteroatoms N, O and/or S in the ring;
M1 stands for a monovalent or polyvalent metal atom; and
M is hydrogen, a monovalent metal cation, one equivalent of a polyvalent metal cation, or an ammonium ion unsubstituted or substituted by (C₁-C₄)-alkyl,
(C₁-C₄)-alkoxy-(C₁-C₄)-alkyl, hydroxy-(C₁-C₄)-alkyl, benzyl or (C₆-C₁₀)-aryl.

2. The dye mixture as claimed in claim 1, wherein
R² is hydrogen, SO₃M, methyl, ethyl, acetyl, phenyl, chlorophenyl, phenylsulfonic acid, morpholinyl or pyridinyl.

3. The dye mixture as claimed in claim 1, wherein
R³ and R⁴ are hydrogen, methyl, ethyl, hydroxymethyl, hydroxypropyl, acetyl, phenyl, chlorophenyl, phenylsulfonic acid, CH₂CH₂OM, CH₂CH₂SO₃M, CH₂COOH, CH₂CH₂COOM or CH₃CHCOOM.

4. The dye mixture as claimed in one or more of claims 1 to 3, wherein the dye of the formula (5) is a compound of the formula (5a) 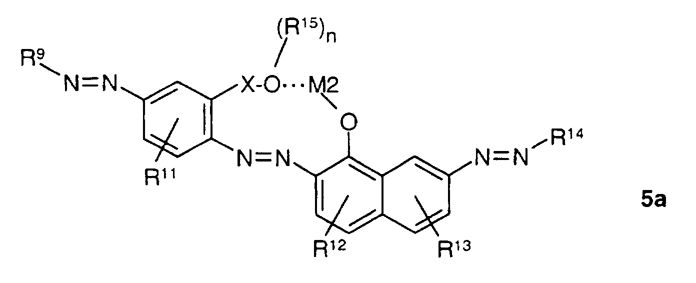 where
M2 is 2/3 Al, Cr, Fe, Co, Ni or Cu,
R¹⁵ is C₁-C₆-alkyl,
n is 0 or 1,
X is a chemical bond, -CO- or -SO₂- ,
R⁹ is a phenyl or naphthyl radical substituted 1, 2 or 3 times by OH, O(C₁-C₆)-alkyl, COOM, SO₃M and/or NH₂,
R¹¹ is H, methyl or O(C₁-C₆)-alkyl,
R¹² and R¹³ are H, COOM or SO₃M,
R¹⁴ is a phenyl, naphthyl, pyridyl, pyridonyl or pyrazolyl radical substituted 1, 2 or 3 times by OH, O(C₁-C₆)-alkyl, COOM, SO₃M, NH₂, NH(C₆-C₁₀)-aryl, NH(C₁-C₆)-acyl and/or phenylsulfo, and
M is H, Na, K, Li, Ca/2 or ammonium.

5. The dye mixture as claimed in one or more of claims 1 to 3, wherein the proportion between the dyes of the formula (4) and (5), based on dry weights, is from 100:1 to 1:100, preferably from 10:1 to 1:10.

6. The dye mixture as claimed in one or more of claims 1 to 5, further comprising a shading colorant from the group consisting of C.I. Acid Yellow 17, 23, C.I. Direct Yellow 86, 98, 132, C.I. Reactive Yellow 37, C.I. Pigment Yellow 17, 74, 83, 97, 120, 139, 151, 155 and 180, C.I. Direct Red 1, 11, 37, 62, 75, 81, 87, 89, 95, 227; C.I. Acid Red 1, 8, 87, 94, 115, 131, 144, 152, 154, 186, 245, 249, 289; C.I. Reactive Red 21, 22, 23, 35, 63, 106, 107, 112, 113, 114, 126, 127, 128, 129, 130, 131, 137, 160, 161, 174, 180; C.I. Pigment Red 122, 176, 184, 185, 269; C.I. Acid Blue 9, C.I. Direct Blue 199, C.I. Pigment Violet 19, and C.I. Pigment Blue 15, 15:3, 15:4.

7. A process for preparing a dye mixture as claimed in at least one of claims 1 to 6, which comprises mixing the dyes of the formulae (4) and (5) and, where appropriate, the shading colorant with one another in the form of dry powders, their solutions, water-moist or solvent-moist presscakes and/or masterbatches.

8. The use of a dye mixture as claimed in at least one of claims 1 to 6 for dyeing and printing natural and synthetic fiber materials, for recording text and images on a recording medium, and for dyeing paper or pulp in the mass.

9. A recording liquid comprising a dye mixture as claimed in one or more of claims 1 to 6.

10. The recording liquid as claimed in claim 9, consisting essentially of from 0.1 to 50% by weight of the dye mixture, calculated as dry weight, from 0 to 99% by weight of water and from 0.5 to 99.5% by weight of organic solvent and/or humectants.

11. The use of the recording liquid as claimed in claim 9 or 10 as an inkjet ink.

12. An ink set consisting of in each case at least one magenta-colored recording liquid, a yellow recording liquid, a cyan-colored recording liquid, and a black recording liquid as claimed in claim 9 or 10.

## Revendications

1. Mélange de colorants constitué essentiellement par un ou plusieurs colorants de formule (4) et un ou plusieurs colorants de formule (5) 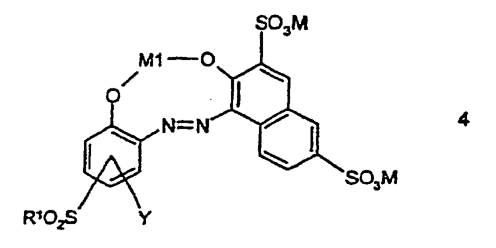 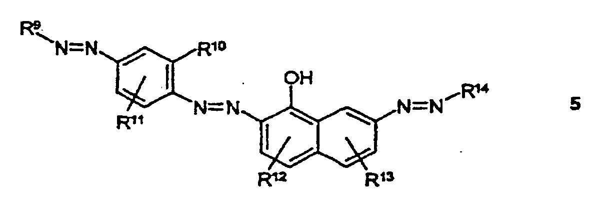
Y représente un atome d'hydrogène, un groupe alkyle en C₁-C₆, alkoxy en C₁-C₆ ou halogène ;
R¹ représente un groupe OM, CH=CH₂, CH₂CH₂OR², CH₂CH₂NR³R⁴, CH₂CH₂SR⁵ ou CH₂CH₂CR⁶R⁷R⁸,
R² représente un atome d'hydrogène, un groupe SO₃M, alkyle en C₁-C₆, alkyle en C₁-C₆ substitué par un ou plusieurs restes pris dans le groupe comprenant OH, NH₂, COOM et SO₃M ; acyle en C₁-C₆, aryle en C₆-C₁₀, aryle en C₆-C₁₀ substitué par un ou plusieurs restes pris dans le groupe comprenant halogène, OH, NH₂, COOM et SO₃M, ou des hétérocycles de 5 à 10 chaînons comprenant 1 à 4 hétéroatomes pris dans le groupe comprenant O, N et S ;
R³ et R⁴ indépendamment l'un de l'autre représentent un atome d'hydrogène, un groupe alkyle en C₁-C₆, alkyle en C₁-C₆ substitué par un ou plusieurs restes pris dans le groupe comprenant OH, NH₂, COOM et SO₃M, acyle en C₁-C₆, aryle en C₆-C₁₀, aryle en C₆-C₁₀ substitué par un ou plusieurs restes pris dans le groupe comprenant OH, halogène, NH₂, COOM et SO₃M ; ou NR³R⁴ forme un hétérocycle ;
R⁵ représente un groupe alkyle en C₁-C₆, alkyle en C₁-C₆ substitué par un ou plusieurs restes pris dans le groupe comprenant OH, NH₂, COOM et SO₃M, acyle en C₁-C₆, aryle en C₆-C₁₀, aryle en C₆-C₁₀ substitué par un ou plusieurs restes pris dans le groupe comprenant OH, halogène, NH₂, COOM et SO₃M, ou SR⁵ forme un hétérocycle ;
R⁶, R⁷, R⁸ les uns indépendamment des autres représentent un atome d'hydrogène, un groupe alkyle en C₁-C₆ ou alkyle en C₁-C₆ substitué par un ou plusieurs restes pris dans le groupe comprenant halogène, OM, NH₂, COOCH₃, COOM et SO₃M ; ou un ou deux des restes R⁶, R⁷, R⁸ représentent un groupe COOM ;
R⁹ représente un reste aryle en C₆-C₁₄ substitué une ou plusieurs fois par des substituants OM, O(alkyle en C₁-C₆), O-(alkyl en C₁-C₆)-COOM, O(alkyl en C₁-C₆)-SO₃M, O-hydroxyalkyle en C₁-C₆), alkyle en C₁-C₆, COOM, SO₃M, SO₂NH₂, SO₂N(hydroxyalkyle en C₁-C₆)₂, SO₂NH-(alkyle en C₁-C₆), SO₂N(alkyle en C₁-C₆)₂, NH₂, NH-alkyle en C₁-C₆, NH-acyle en C₁-C₆, NH-aryle en C₆-C₁₀, N(hydroxyalkyle en C₁-C₆)₂, N(alkyle en C₁-C₆)₂ et/ou halogène ;
R¹⁰ représente un groupe OM, O-alkyle en C₁-C₆, COOM, SO₃M, COO-alkyle en C₁-C₆ ou SO₃-alkyle en C₁-C₆ ;
R¹¹, R¹² et R¹³ sont identiques ou différents et représentent un atome d'hydrogène, un groupe OM, O-alkyle en C₁-C₆, O-(alkyl en C₁-C₆)COOM, O-(alkyl en C₁-C₆)SO₃M, O(hydroxyalkyle en C₁-C₆), alkyle en C₁-C₆, COOM, SO₃M, SO₂NH₂, SO₂N(hydroxyalkyle en C₁-C₆)₂, SO₂NH-(alkyle en C₁-C₆), SO₂N(alkyle en C₁-C₆)₂, NH₂, NH-alkyle en C₁-C₆, NH-acyle, NH-aryle en C₆-C₁₄, N(hydroxyalkyle en C₁-C₆)₂, N(alkyle en C₁-C₆)₂ ou halogène,
R¹⁴ représente un cycle mono- ou binucléaire, carbocyclique ou hétérocyclique, aromatique ou aliphatique, pouvant présenter dans le cycle 1, 2 ou 3 des hétéroatomes N, 0 et/ou S, non substitué ou substitué une ou plusieurs fois par des substituants OM, alkyle en C₁-C₆, O-(alkyl en C₁-C₆)COOM, O-(alkyl en C₁-C₆)SO₃M, O(hydroxyalkyle en C₁-C₆), alkyle en C₁-C₆, COOM, SO₃M, SO₂NH₂, CONH-phényle, SO₂NH-phényle, SO₂N(hydroxyalkyle en C₁-C₆)₂, SO₂NH-(alkyle en C₁-C₆), SO₂N(alkyle en C₁-C₆)₂, NH₂, NH-alkyle en C₁-C₆, NH-acyle en C₁-C₆, NH-aryle en C₆-C₁₀, N(hydroxyalkyle en C₁-C₆)₂, N(alkyle en C₁-C₆)₂, halogène et/ou phénylsulfo ;
M1 représente un atome de métal mono- ou multivalent ; et
M représente un atome d'hydrogène, un cation métal monovalent, un équivalent d'un cation métal multivalent ou un ion ammonium éventuellement substitué par un substituant alkyle en C₁-C₄, (alkoxy en C₁-C₄)-alkyle en C₁-C₄, hydroxyalkyle en C₁-C₄, benzyle ou aryle en C₆-C₁₀.

2. Mélange de colorants selon la revendication 1, **caractérisé en ce que**
R² représente un atome d'hydrogène, un groupe SO₃M, méthyle, éthyle, acétyle, phényle, chlorophényle, acide phénylsulfonique, morpholinyle ou pyridinyle.

3. Mélange de colorants selon la revendication 1, **caractérisé en ce que**
R³ et R⁴ représentent un atome d'hydrogène, un groupe méthyle, éthyle, hydroxyméthyle, hydroxypropyle, acétyle, phényle, chlorophényle, acide phénylsulfonique, CH₂CH₂OM, CH₂CH₂SO₃M, CH₂COOH, CH₂CH₂COOM ou CH₃CHCOOM.

4. Mélange de colorants selon une ou plusieurs des revendications 1 à 3, **caractérisé en ce que** le colorant de formule (5) est un composé de formule (5a) 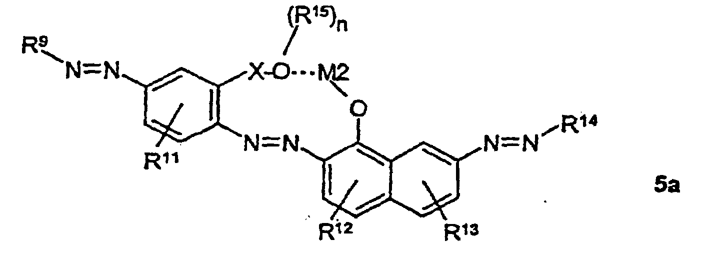 où
M2 représente 2/3 Al, Cr, Fe, Co, Ni ou Cu,
R¹⁵ représente un groupe alkyle en C₁-C₆,
n vaut 0 ou 1,
X représente une liaison chimique, -CO- ou -SO₂-,
R⁹ représente un reste phényle ou naphtalène substitué 1, 2 ou 3 fois par des substituants OH, O(alkyle en C₁-C₆), COOM, SO₃M et/ou NH₂,
R¹¹ représente un atome d'hydrogène, un groupe méthyle ou O(alkyle en C₁-C₆),
R¹² et R¹³ représentent un atome d'hydrogène, un groupe COOM ou SO₃M,
R¹⁴ représente un reste phényle, naphtyle, pyridyle, pyridonyle ou pyrazolyle substitué 1, 2 ou 3 fois par des substituants OH, O-alkyle en C₁-C₆, COOM, SO₃M, NH₂, NH-aryle en C₆-C₁₀, NH- acyle en C₁-C₆ et/ou phénylsulfo, et
M représente un atome d'hydrogène, Na, K, Li, Ca/2 ou ammonium.

5. Mélange de colorants selon une ou plusieurs des revendications 1 à 3, **caractérisé en ce que** le rapport de mélange entre les colorants de formule (4) et (5), par rapport au poids à sec, est de 100:1 à 1:100, de préférence de 10:1 à 1:10.

6. Mélange de colorants selon l'une des revendications 1 à 5, **caractérisé en ce qu'**il renferme de plus un agent de nuançage pris dans le groupe comprenant C.I. Acid Yellow 17, 23, C.I. Direct Yellow 86, 98, 132, C.I. Reactive Yellow 37, C.I. Pigment Yellow 17, 74, 83, 97, 120, 139, 151, 155 et 180, C.I. Direct Red 1, 11, 37, 62, 75, 81, 87, 89, 95, 227 ; C.I. Acid Red 1, 8, 87, 94, 115, 131, 144, 152, 154, 186, 245, 249, 289 ; C.I. Reactive Red 21, 22, 23, 35, 63, 106, 107, 112, 113, 114, 126, 127, 128, 129, 130, 131, 137, 160, 161, 174, 180 ; C.I. Pigment Red 122, 176, 184, 185, 269 ; C.I. Acid Blue 9, C.I. Direct Blue 199, C.I. Pigment Violet 19, C.I. Pigment Blue 15, 15:3, 15:4.

7. Procédé pour la préparation d'un mélange de colorants selon au moins l'une des revendications 1 à 6, **caractérisé en ce qu'**on mélange les colorants de formules (4) et (5), et éventuellement l'agent de nuançage sous forme de poudre sèche, de leurs solutions, de gâteau pressé humide d'eau ou de solvants, et/ou de mélanges-maîtres.

8. Utilisation d'un mélange de colorants selon au moins l'une des revendications 1 à 6 pour la teinture et l'impression de matières fibreuses naturelles et synthétiques pour l'enregistrement d'écriture et d'images sur un milieu d'enregistrement et pour la teinture de papier ou de cellulose dans la masse.

9. Liquide d'enregistrement renfermant un mélange de colorants selon une ou plusieurs des revendications 1 à 6.

10. Liquide d'enregistrement selon la revendication 9, renfermant essentiellement de 0,1 à 50 % en masse du mélange de colorants, calculé sous forme de poids à sec, de 0 à 99 % en masse d'eau et de 0,5 à 99,5 % en masse de solvant organique et/ou d'agent humidifiant.

11. Utilisation du liquide d'enregistrement selon la revendication 9 ou 10 en tant qu'encre de type ink-jet.

12. Trousse d'encres constitué à chaque fois par au moins un liquide d'enregistrement de couleur magenta, un liquide d'enregistrement de couleur jaune, un liquide d'enregistrement de couleur cyan et un liquide d'enregistrement de couleur noire, selon la revendication 9 ou 10.
